# EUROPÄISCHE PATENTSCHRIFT

(11) **EP 3 186 307 B1**
(45) Veröffentlichungstag und Bekanntmachung des Hinweises auf die Patenterteilung: **05.01.2022**
(21) Anmeldenummer: 15757223.1
(22) Anmeldetag: 27.08.2015
(51) Int. Cl.: C08K 3/04, C08K 3/36, C08K 5/17, C08L 7/00

(54) **DIPHENYLGUANIDIN-FREIE KAUTSCHUKMISCHUNGEN ENTHALTEND POLYETHYLENIMIN**
DIPHENYLGUANIDINE-FREE RUBBER COMPOSITIONS CONTAINING POLYETHYLENIMINE
MÉLANGES DE CAOUTCHOUC EXEMPTS DE DIPHÉNYLGUANIDINE CONTENANT DU POLYÉTHYLÉNIMINE

(30) Priorität: 29.08.2014 EP 14182915
(43) Veröffentlichungstag der Anmeldung: 05.07.2017
(73) Patentinhaber: LANXESS Deutschland GmbH, 50569 Köln (DE)
(72) Erfinder: FELDHUES, Ulrich, 51465 Bergisch-Gladbach (DE); UNTERBERG, Heinz, 41540 Dormagen (DE); HAGEMANN, Jörg, 51061 Köln (DE); WEIDENHAUPT, Hermann-Josef, 50259 Pulheim (DE); WIEDEMEIER-JARAD, Melanie, 41540 Dormagen (DE)
(86) Internationale Anmeldenummer: PCT/EP2015/069671
(87) Internationale Veröffentlichungsnummer: WO 2016/030469

(56) Entgegenhaltungen:
- US-A- 3 867 326
- US-A- 3 994 742

## Beschreibung

Die Erfindung betrifft Diphenylguanidin-freie Kautschukmischungen, enthaltend mindestens je einen Kautschuk, einen Kieselsäure-basierten Füllstoff und/oder Ruß und Polyethylenimin, deren Herstellung und Verwendung, sowie die dadurch erhältlichen Vulkanisate nach dem Vulkanisationsverfahren, insbesondere in Form von Reifen, Teilen von Reifen oder technischen Gummiartikeln.

Mit der Erfindung der Vulkanisation von Naturkautschuk wurde ein neuer Werkstoff geschaffen, dessen einzigartiges Eigenschaftsprofil wesentlich zur Entwicklung der modernen Technik beigetragen hat. Zu Beginn des 20. Jahrhunderts erkannte man die beschleunigende Wirkung basischer organischer Verbindungen.

Aus der DRP 265221 ist bekannt, dass Piperidin zur Beschleunigung der Vulkanisation im Naturkautschuk sowie in synthetisch hergestellten Kautschuken verwendet wurde. Piperidin ist giftig, sehr flüchtig und übelriechend, so dass die Kautschuk-verarbeitende Industrie bereits früh basische Alternativen zu Piperidin suchte und einsetzte.

In weiteren Patentveröffentlichungen sind beispielsweise Anilin und andere stickstoffhaltige organische Verbindungen wie Hexamethylentetramin, Thiocarbanilid als Beschleuniger beschrieben.

Generell bietet die Vernetzung von Kautschuken mit Schwefel-Beschleuniger-Systemen den Vorteil, dass durch die Verwendung unterschiedlicher Beschleuniger und deren Kombinationen die Verarbeitungs- und Produkteigenschaften über einen weiten Bereich variiert werden können, wie beispielsweise die Einstellung der Induktionsperiode (Scorch-Zeit, welche möglichst nicht zu kurz ausfallen soll) und der Reaktionsgeschwindigkeit die vorzugsweise hoch ist und dadurch zu einer kurzen Ausvulkanisationszeit führt. Zur Regulierung der Induktions- und Vulkanisationszeit, können den Kautschukmischungen sogenannte Zweitbeschleuniger zugesetzt werden.

Zu den bekanntesten Zweitbeschleunigern zählen die Guanidin-Beschleuniger. Sie sind langsam wirkende Beschleuniger, mit denen die An(Scorch)- und/oder Ausvulkanisationszeit angepasst werden kann. Sie steuern zudem der verzögernden Wirkung saurer Füllstoffe entgegen.

Die Spannungswertcharakteristik als Indikator des Vulkanisationsfortschritts von Kautschukmischungen mit Guanidin-Beschleunigern zeichnet sich typischerweise durch einen langsamen Anstieg und relativ spätes Erreichen des Maximums aus. Diese Beschleuniger führen, alleine eingesetzt, meist zu einem verhältnismäßig ungünstigen Fließzeit/Heizzeit-Verhältnis und zu einer relativ starken Reversion im Kautschukvulkanisat. Um diese Nachteile zu vermeiden, werden sie häufig in Kombinationen mit Primär-Beschleunigern, wie beispielsweise Sulfenamid-basierten Beschleunigern, eingesetzt.

Die Guanidin-Beschleuniger insbesondere Diphenylguanidin erlauben aber nicht nur eine Einstellung des Vulkanisationsverhaltens, sondern verbessern gleichzeitig verschiedene wichtige Stoffeigenschaften der Kautschukmischung, insbesondere die Mooney Viskosität und die Stoffeigenschaften des daraus erhaltenen Vulkanisats, wie z.B. die Bruchdehnung, Zugfestigkeit und den Modul 300.

Die Reduktion der Mooney-Viskosität der Kautschukmischung ist von besonderer Bedeutung für füllstoffhaltige Kautschukmischungen, insbesondere solche, welche Kieselsäure basierende Füllstoffe und/oder Ruß enthalten und beispielsweise für Reifen eingesetzt werden. Solche Kautschukmischungen weisen üblicherweise eine hohe Mooney-Viskosität auf, was die Verarbeitung deutlich erschwert.

Es ist dem Fachmann bekannt, dass Guanidin-Beschleuniger unter Vulkanisationsbedingungen volatile organische Aminverbindungen freisetzen, beispielsweise spaltet der in der Praxis meistverbreitete Beschleuniger, das Diphenylguanidin (DPG), bei der Vulkanisation Anilin ab. Mit dem Bestreben die Emission dieser organischen Amine, insbesondere Anilin zu vermeiden, besteht Bedarf an neuen Zweitbeschleunigern.

In diversen Patenten und Patentanmeldungen sind verschiedene DPG-reduzierte Mischungen beschrieben:
So wird in US 2010/0048775, US 7605201, US 6753374 und US 7714050 vorgeschlagen, in Kautschukmischungen ganz oder teilweise die DPG-Menge durch ein spezielles Amin oder ein Thiuramdisulfid zu ersetzen.

In WO 2013/104492 wird eine Kautschukmischung beschrieben, die 0,65 phr DPG und 2 phr Polyole wie beispielsweise TMP beinhaltet.

FR 2984898 beschreibt Mischungen enthaltend weniger als 0,45 phr DPG sowie 0,4 phr Aminoether-Alkohole (wie beispielsweise 2-(2-Aminoethoxy)ethanol).

FR 2984897 beschreibt Mischungen enthaltend weniger als 0,5 phr DPG und weniger als 0,45 phr Ether-amine wie beispielsweise 3-(2-Ethylhexyloxy)propylamine.

FR 2984895 beschreibt Mischungen enthaltend weniger als 0,5 phr DPG und ca. 3,0 phr Alkalimetalhydroxyde und/oder Erdalkalihydroxyde.

FR 2984896 beschreibt Mischungen enthaltend weniger als 0,5 phr DPG und weniger als 8 phr eines primären Amins wie beispielsweise Hexadecylamin.

Aus der US 3867326 sind Verstärkungsadditive für Gummimischungen aus bestimmten Siliziumdioxiden und Polyethyleniminen bekannt. Die in den Arbeitsbeispielen beschriebenen Kautschukmischungen enthalten ua. Siliziumdioxid, Polyethylenimin und Di-ortho-tolylguanidin.

Die US 3 994 742 offenbart Gummimischungen auf Basis von Siliziumpigmenten und Kupplungsmitteln, wobei die Kupplungsmittel durch Umsetzung von Stickstoff-haltigen Verbindungen, z.B. Polyalkylenaminen oder Polyalkyleniminen mit schwefelhaltigen reaktiven Verbindungen hergestellt werden, insbesondere von Polyethyleniminen mit Ethylensulfid. Lediglich im Vergleichsbeispiel 7E ist eine Gummimischung beschrieben die kein Kupplungsmittel sondern nur Polyethylenimin enthält, allerdings in Kombination mit Di-ortho-tolylguanidin.

Der obige Stand der Technik geht jedoch nur auf die im Vergleich zur Anwendung von DPG gleichbleibende oder verlängerte Scorch-Zeit ein und gibt dem Fachmann keinerlei Anleitung zur Hand, wie die durch Verringerung des DPG-Anteils zu erwartende höhere Mooney-Viskosität der Kautschukmischungen und die beeinträchtigten Stoffeigenschaften des daraus erhaltenen Vulkanisats wie z.B. Bruchdehnung, Zugfestigkeit und Modul 300, kompensiert werden können.

Der vorliegenden Erfindung liegt die Aufgabe zugrunde, toxikologisch weniger bedenkliche und bei der Vulkanisation keine volatilen organischen Amine freisetzende Kautschukmischungen bereitzustellen, bei denen die anwendungsrelevanten Eigenschaften, d.h. die Mooney Viskosität der Kautschukmischungen sowie die Bruchdehnung, Zugfestigkeit, Modul 300 und Ausvulkanisationszeit (T95) der daraus erhältlichen Vulkanisate nicht wesentlich schlechter bzw. möglichst besser als bei den entsprechenden Diphenylguanidin-haltigen Mischungen bzw. Vulkanisaten sind.

Überraschend wurde nun gefunden, dass bei Verwendung von Polyethylenimin, zusammen mit mindestens je einem Kautschuk, einem Kieselsäure-basierten Füllstoff und/oder Ruß Diphenylguanidin-freie Kautschukmischungen erhältlich sind, welche gegenüber den DPG-haltigen Äquivalenten eine niedrigere Mooney-Viskositäten und eine verkürzte Ausvulkanisationszeit (t95), aufweisen, wobei das daraus erhältliche Vulkanisat hinsichtlich Modul 300, Zugfestigkeit und Bruchdehnung gleiche oder bessere Werte aufweist, im Vergleich zu DPG-haltigen Vulkanisaten.

Im Folgenden steht die Einheit phr für Gewichtsteile bezogen auf 100 Gewichtsteile an in der Kautschukmischung eingesetztem Kautschuk.

Die vorliegende Erfindung betrifft daher Kautschukmischungen enthaltend zumindest jeweils
- einen Kautschuk,
- einen Kieselsäure-basierten Füllstoff und/oder Ruß,
- Polyethylenimin,
die dadurch gekennzeichnet sind, dass sie weder Diphenylguanidin noch andere organische Guanidinderivate enthalten.

Ein weiterer Gegenstand der vorliegenden Erfindung ist ein Verfahren zur Herstellung der erfindungsgemäßen Kautschukmischungen, bei welchem man jeweils mindestens
- einen Kautschuk,
- einen Kieselsäure-basierten Füllstoff und/oder Ruß,
- Polyethylenimin

bei Massetemperaturen von mindestens 30°C, vorzugsweise von 40 bis 200°C besonders bevorzugt bei 80 bis 150°C. Typischerweise wird das Verfahren bei Scherraten von 1 - 1000 sec (exp.-1), bevorzugt 1 - 100 sec (exp.-1) durchgeführt. Die Zugabe von Polyethylenimin kann zu jedem Zeitpunkt des Mischens erfolgen, auch bei höheren Temperaturen im Bereich von 35°C bis 200 °C, bevorzugt bei einer Temperatur von ca. 40°C.

Die erfindungsgemäßen Kautschukmischungen können anschließend nach Zugabe von mindestens einem Vernetzer in üblicher Weise vulkanisiert werden.

Die erfindungsgemäße Kautschukmischung enthält weder Diphenylguanidin noch andere organische Guanidinderivate. Organische Guanidinderivate sind Verbindungen, bei denen die Guanidinfunktion mit ein oder mehreren C₁-C₈-Alkylgruppen, C₂-C₈-Alkenylgruppen C₆-C₈-Arylgruppen, C₇-C₁₀-Aralkylgruppen und/oder C₁-C₈-Heteroalkylgruppen substituiert ist.

Die erfindungsgemäße Kautschukmischung kann vorteilhaft zur Herstellung sowohl Zinkfreier als auch Zink-haltiger Kautschukvulkanisate eingesetzt werden.

Der Ausdruck Polyethylenimin (PEI) ist im Kontext der vorliegenden Erfindung als Homopolymer(e) des Ethylenimins bzw. Copolymer(e) von Ethylenimin und einem oder mehreren Comonomeren zu verstehen, wobei bei den Copolymeren der Anteil der von Ethylenimin abstammenden Wiederholungeinheiten jeweils bezogen auf die Gesamtmasse des Polymers mindestens 50 Gew.-%, bevorzugt mindestens 80 Gew.-%, weiter bevorzugt mindestens 90 Gew.-%, besonders bevorzugt mindestens 95 Gew.-%, und ganz besonders bevorzugt mindestens 98 Gew.-% beträgt. Der Ausdruck Polyethylenimin umfasst dabei auch Mischungen von Homo- und/oder Copolymeren des Ethylenimins beispielsweise mit verschiedenen Molekulargewichten, Verzweigungsgraden, Comonomeren usw.

Typischerweise haben solche Homo- oder Copolymere ein gewichtsgemitteltes Molekulargewicht Mw größer 200, bevorzugt von 300 bis 3.000.000, besonders bevorzugt von 400 bis 800.000, ganz besonders bevorzugt von 500 bis 100.000, weiter bevorzugt von 600 bis 30.000 und meist bevorzugt von 700 bis 7.000.

Erfindungsgemäßes Polyethylenimin kann eine lineare oder verzweigte Struktur aufweisen, auch Mischungen von linearem und verzweigtem Polyethylenimin sind verwendbar.

In einer bevorzugten Ausführungsform wird Polyethylenimin mit verzweigter Struktur, welches sowohl primäre als auch sekundäre und tertiäre Aminogruppen aufweisen, eingesetzt.

In der vorliegenden Erfindung verwendbare Ethylendiamin-Ethylenimin-Copolymere bzw. Polyethylenimin Homopolymere sind beispielsweise diejenigen gemäß CAS-Nummern 25987-06-8 und 9002-98-6.

Erfindungsgemäße Kautschukmischungen enthalten vorzugsweise von 0,01 bis 10 phr, bevorzugt von 0,03 bis 3 phr, besonders bevorzugt von 0,1 bis 1 phr, weiter bevorzugt 0,2 bis 0,6 phr und ganz besonders bevorzugt 0,2 bis 0,5 phr Polyethylenimin.

Erfindungsgemäße Kautschukmischungen und erfindungsgemäße Kautschukvulkanisate können vorzugsweise noch weitere bekannte Kautschukadditive enthalten wie beispielsweise 1,3-Bis((3-methyl-2,5-dioxopyrrol-1-yl)methyl)benzol (CAS-Nr.: 119462-56-5), Hexamethylen-1,6-bis(thiosulfate) insbesondere als Dinatriumsalz-Dihydrat (CAS-Nr.: 5719-73-3) und 1,6-Bis(N,N-dibenzylthiocarbamoyldithio)hexan (CAS-Nr. 151900-44-6). Die genannten Reversionsschutzmittel können einzeln oder in beliebiger Mischung untereinander eingesetzt werden.

In einer weiteren bevorzugten Ausführungsform kann die Kautschukmischung 0,1 bis 15 phr des Reversionsschutzmittels 1,6-Bis(N,N-dibenzylthiocarbamoyldithio)hexan (CAS-Nr. 151900-44-6), vorzugsweise 0,1-2 phr, besonders bevorzugt 0,2-1,0 phr beinhalten.

In einer weiteren bevorzugten Ausführungsform kann die Kautschukmischung 0,1 bis 40 phr, vorzugsweise 1 bis 12 phr eines C₁-C₄-Alkylesters des Glycerins, insbesondere Triacetin beinhalten.

Bevorzugt erfolgt bei der erfindungsgemäßen Kautschukmischung die Zugabe von Polyethylenimin zusammen mit dem Schwefel und Beschleuniger bei beispielsweisen Massetemperaturen von 35 - 200 °C. Polyethylenimin kann auch separat vor oder nach dem Schwefel sowie Beschleuniger zu dem Kautschuk hinzugeben werden.

In einer weiteren Ausführungsform kann Polyethylenimin in der ersten Mischstufe, zusammen mit Silan und Kieselsäure bei beispielsweisen Massetemperaturen von 100-250°C und/oder dem/n Kautschuk/en zugegeben werden.

In einer weiteren Ausführungsform kann bei der erfindungsgemäßen Kautschukmischung die Zugabe von Polyethylenimin sowie die Zugabe von 1,6-Bis(N,N-dibenzylthio-carbamoyldithio)hexan (CAS-Nr.: 151900-44-6) bevorzugt im ersten Teil des Mischprozesses bei beispielsweisen Massetemperaturen von 100 - 250 °C erfolgen, sie kann jedoch auch später bei tieferen Temperaturen (40 - 100°C) beispielsweise zusammen mit Schwefel und/oder Beschleuniger erfolgen.

Polyethylenimin und/oder 1,6-Bis(N,N-dibenzylthiocarbamoyldithio)hexan (CAS-Nr.: 151900-44-6) können unabhängig voneinander sowohl in reiner Form als auch auf einen inerten, organischen oder anorganischen Träger, vorzugsweise einen Träger ausgewählt aus der Gruppe enthaltend natürliche oder synthetische Silikate, insbesondere neutrales, acides oder basisches Silica, Aluminiumoxid, Ruß oder Zinkoxid aufgezogen und/oder daran adsorbiert eingesetzt werden.

Polyethylenimin kann auch als Teil einer Mischung mit 1,6-Bis(N,N-dibenzyl-thiocarbamoyldithio)hexan (CAS-Nr.: 151900-44-6) dem Mischprozess zugegeben werden.

Des Weiteren kann Polyethylenimin auch als Teil einer Mischung mit Glycerintriacetat (Triacetin) dem Mischprozess zugegeben werden.

Besonders geeignet sind die erfindungsgemäßen Kautschukmischungen für die Herstellung von Reifenlaufflächen, Subtreads, Karkassen und Apexmischungen. Reifen bzw. Reifenteile schließen dabei auch beispielsweise Laufflächen von Sommer-, Winter- und All-Seasons-Reifen sowie Laufflächen von PKW- und LKW-Reifen ein.

Ein weiterer Aspekt der vorliegenden Erfindung sind Vulkanisate erhältlich durch die Vulkanisation der erfindungsgemäßen Kautschukmischung.

Die hergestellten Kautschukvulkanisate eignen sich zur Herstellung diverser Kautschukprodukte, beispielsweise zur Herstellung von Reifenbauteilen insbesondere für Reifenlaufflächen, Subtreads, Karkassen, Seitenwänden, verstärkten Seitenwänden für Notlaufreifen, Apexmischungen etc., Haftmischungen sowie für die Herstellung von technischen Gummiartikeln wie Dämpfungselementen, Walzenbelägen, Belägen von Förderbändern, Riemen, Spinnkopsen, Dichtungen, Golfballkernen, Schuhsohlen, etc.. Die erfindungsgemäßen Kautschukprodukte können insbesondere damit ausgestatteten Kraftfahrzeugen vorteilhafte Betriebseigenschaften verleihen. Daher sind solche Kraftfahrzeuge ebenfalls Gegenstand der vorliegenden Erfindung.

Die erfindungsgemäße Kautschukmischung und Kautschukvulkanisat enthalten ein oder mehrere Kautschuke wie beispielsweise Naturkautschuk (NR) und/oder Synthesekautschuke. Bevorzugte Synthesekautschuke sind beispielsweise

| | |
|---|---|
| BR | Polybutadien |
| ABR | Butadien/Acrylsäure-C1-C4-alkylester-Copolymerisat |
| CR | Polychloropren |
| IR | Polyisopren |
| SBR | Styrol/Butadien-Copolymerisate mit Styrolgehalten von 1 - 60, vorzugsweise 20-50 Gew-% |
| IIR | Isobutylen/Isopren-Copolymerisate |
| NBR | Butadien/Acrylnitril-Copolymerisate mit Acrylnitrilgehalten von 5-60, vorzugsweise 10-50 Gew.-% |
| HNBR | teilhydrierter oder vollständig hydrierter NBR-Kautschuk |
| EPDM | Ethylen/Propylen/Dien-Copolymerisate |

In einer bevorzugten Ausführungsform enthält die erfindungsgemäße Kautschukmischung mindestens einen unpolaren Kautschuk ausgewählt aus der Gruppe bestehend aus NR, SBR, BR, IR, SIBR, IIR, ENR und EPDM, vorzugsweise aus der Gruppe bestehend aus NR, SBR, BR, IIR und EPDM, besonders bevorzugt aus der Gruppe bestehend aus NR, BR und SBR wobei der Gesamtgehalt an diesen unpolaren Kautschuken in der Kautschukmischung typischerweise mindestens 50 phr, vorzugsweise mindestens 60 phr und besonders bevorzugt mindestens 70 phr beträgt. Typischerweise ist der Gehalt an polaren Kautschuken mit einem Löslichkeitsparameter mehr als 17,6 wie NBR, HNBR, SNBR, HXNBR und XNBR in der Kautschukmischung jeweils kleiner 10 phr, bevorzugt kleiner 1 phr, besonders bevorzugt kleiner 0,1 phr und ganz besonders bevorzugt kleiner 0,01 phr.

### Kieselsäure-basierender Füllstoff

Als kieselsäurehaltige Füllstoffe im Sinne dieser Erfindung werden folgende Stoffe verwendet:
- Kieselsäure, insbesondere Fällungskieselsäure oder pyrogene Kieselsäure, hergestellt z.B. durch Fällung von Lösungen von Silikaten oder Flammenhydrolyse von Siliziumhalogeniden mit spezifischen Oberflächen von 5 - 1000, vorzugsweise 20 - 400 m²/g (BET-Oberfläche) und mit Primärteilchengrößen von 10 - 400 nm. Die Kieselsäuren können gegebenenfalls auch als Mischoxide mit anderen Metalloxiden wie AI-, Mg-, Ca-, Ba-, Zn-, Zr-, Ti-Oxiden vorliegen.
- synthetische Silikate, wie Aluminiumsilikat, Erdalkalisilikate wie Magnesium- oder Calciumsilikat, mit BET-Oberflächen von 20 - 400 m²/g und Primärteilchengröße von 10 - 400 nm,
- natürliche Silikate, wie Kaolin und andere natürliche vorkommende Kieselsäuren, sowie Mischungen dieser Stoffe.

### Ruß-Füllstoff

Zusätzlich oder alternativ zu den Kieselsäure-basierender Füllstoffen können Ruße, insbesondere sind hierfür nach dem Flammruß, Furnace- oder Gasruß-Verfahren hergestellt Ruße geeignet, welche BET-Oberflächen von 20 - 200 m²/g besitzen, wie SAF-, ISAF, IISAF-, HAF-, FEF- oder GPF-Ruße eingesetzt werden.

Die Kautschukmischungen enthalten vorzugsweise 5 bis 200 phr, besonders bevorzugt 30 bis 150 phr an kieselsäurebasierten Füllstoffen. Der Gesamtanteil an zusätzlichen Füllstoffen, insbesondere Rußen, bevorzugt nach dem Flammruß, Furnace- oder Gasruß-Verfahren hergestellten Rußen in der Kautschukmischung beträgt typischerweise von 0 bis 160 phr, vorzugsweise 1 bis 100 phr, besonders bevorzugt 5 bis 80 phr. Sofern die Kautschukmischung Ruß und kieselsäurebasierende Füllstoffe enthält, so beträgt die Gesamtmenge dieser beiden Füllstoffarten vorzugsweise 20 bis 160 phr, besonders bevorzugt 25 bis 140 phr.

In einer bevorzugten Ausführungsform ist der Gehalt an Russ basierten Füllstoffen im Verhältnis zu Kieselsäure basierten Füllstoffen geringer.

Des Weiteren können erfindungsgemäße Kautschukmischungen und Kautschukvulkanisate einen oder mehrere, schwefelhaltige Silane und oder einen oder mehrere Vernetzer enthalten. Hierfür sind insbesondere Schwefel-basierende oder peroxidische Vernetzer geeignet, wobei Schwefel-basierte Vernetzer besonders bevorzugt sind.

Generell kann der erfindungsmäßen Kautschukmischung in beliebigen Mengen sogenannter Reclaim-Rubber, wie er beispielweise in der CN101628994 beschrieben wird, eingesetzt werden.

Als schwefelhaltige Silane für die erfindungsgemäße Kautschukmischung und Kautschukvulkanisate können die folgenden eingesetzt werden: Bis-(triethoxysilylpropyl)-tetrasulfan und das -disulfan sowie 3-(Triethoxysilyl)-1-propanthiol oder Silane wie Si 363 der Evonik, Deutschland oder Silan NXT bzw. NXT Z der Momentive (früher GE, USA), wobei der Alkoxy-Rest Methoxy oder Ethoxy bedeutet, in Einsatzmengen von 2 bis 20 Gew.-Teilen, bevorzugt 3-11 Gew.-Teilen jeweils berechnet als 100%iger Wirkstoff und bezogen auf 100 Gew.-Teile Kautschuk. Es können aber auch Mischungen aus diesen schwefelhaltigen Silanen eingesetzt werden. Flüssige Schwefelhaltige Silane können zur besseren Dosierbarkeit und/oder Dispergierbarkeit auf einem Träger aufgezogen werden (dry liquid). Der Wirkstoffgehalt liegt vorzugsweise zwischen 30 und 70 Gew.-Teilen, bevorzugt 40 und 60 Gew.-Teilen je 100 Gew.-Teile dry liquid.

In einer weiteren Ausführungsform können die vorliegenden Kautschukmischungen 50 bis 100 phr Kieselsäure-basierten Füllstoff und 0,2 bis 12 phr an organischen Silanen, vorzugsweise schwefelhaltigen organischen Silanen, besonders bevorzugt Alkoxysilyl- und ganz besonders bevorzugt Trialkoxy-silylgruppen-haltigen schwefelhaltigen organischen Silanen enthalten.

Als peroxidische Vernetzer werden vorzugsweise Bis(2,4-dichlorbenzyl)peroxid, Dibenzoylperoxid, Bis(4-chlorbenzoyl)peroxid, 1,1-Bis(t-butylperoxy)-3,3,5-trimethylcylohexan, tert-Butylperbenzoat, 2,2-Bis(t-butylperoxy)butan, 4,4-Di-tert-butylperoxynonylvalerat, Dicumylperoxid, 2,5-Dimethyl-2,5-di(tert-butylperoxy)hexan, tert-Butylcumylperoxid, 1,3-Bis(t-butylperoxyisopropyl)benzol, Di-tert-butylperoxid und 2,5-Dimethyl-2,5-di(tert-butylperoxy)-3-hexin eingesetzt.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropantri(meth)acrylat, Triallyltrimellitat, Ethylenglycoldi(meth)acrylat, Butandioldi(meth)acrylat, Trimetylolpropan-tri(meth)acrylat, Zinkdiacrylat, Zinkdimethacrylat, 1,2-Polybutadien oder N,N'-m-Phenylen-dimaleinimid geeignet.

Als Vernetzer kann Schwefel in elementarer löslicher oder unlöslicher Form oder in Form von Schwefelspendern eingesetzt werden. Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), Tetramethylthiuramdisulfid (TMTD) und Tetrabenzylthiuramdisulfid (TBzTD) in Frage. In einer bevorzugten Ausführungsform enthält die Kautschukmischung 0,1-15 phr TBzTD, vorzugsweise 0,1-2 phr, besonders bevorzugt 0,1-0,5 phr.

Grundsätzlich kann die Vernetzung der erfindungsgemäßen Kautschukmischung mit Schwefel oder Schwefelspendern allein erfolgen, oder zusammen mit Vulkanisationsbeschleunigern, wofür z.B. Dithiocarbamate, Thiurame, Thiazole, Sulfenamide, Xanthogenate, bi- oder polycyclische Amine, Dithiophosphate, Caprolactame und Thioharnstoffderivate geeignet sind. Weiterhin sind auch Zink-diamindiisocyanat, Hexamethylentetramin, 1,3-Bis(citraconimidomethyl)benzol sowie zyklische Disulfane geeignet. Bevorzugt enthalten die erfindungsgemäßen Kautschukmischungen Schwefel-basierende Vernetzer und Vulkanisationsbeschleuniger.

Besonders bevorzugt werden als Vernetzungsmittel Schwefel, Magnesiumoxid und/oder Zinkoxid eingesetzt, denen die bekannten Vulkanisationsbeschleuniger, wie Merkaptobenzothiazole, Thiazolsulfenamide, Thiurame, Thiocarbamate, Xanthogenate und Thiophosphate zugesetzt werden.

Die Vernetzungsmittel und Vulkanisationsbeschleuniger werden bevorzugt in Mengen von 0,1 bis 10 phr, besonders bevorzugt von 0,1 bis 5 phr, in die erfindungsgemäßen Kautschukmischung eingesetzt.

Die erfindungsgemäße Kautschukmischung und das erfindungsgemäße Kautschukvulkansiat können weitere Kautschukhilfsmittel enthalten, wie beispielsweise Haftsysteme, Alterungsschutzmittel, Wärmestabilisatoren, Lichtschutzmittel, Antioxidantien, insbesondere Ozonschutzmittel, Flammschutzmittel, Verarbeitungshilfsmittel, Schlagzähfestigkeitsverbesserer, Weichmacher, Tackifier, Treibmittel, Farbstoffe, Pigmente, Wachse, Streckmittel, organische Säuren, Verzögerer, Metalloxide und Aktivatoren, insbesondere Triethanolamin, Polyethylenglykol, Hexantriol und Reversionsschutzmittel.

Diese Kautschukhilfsmittel werden in üblichen Mengen eingesetzt, die sich u. a. nach dem Verwendungszweck der Vulkanisate richten. Übliche Mengen sind 0,1 bis 30 phr.

Als Alterungsschutzmittel werden bevorzugt alkylierte Phenole, styrolisiertes Phenol, sterisch gehinderte Phenole wie 2,6-Di-tert.-butylphenol, 2,6-Di-tert-butyl-p-kresol (BHT), 2,6-Di-tert.-butyl-4-ethylphenol, estergruppenhaltige sterisch gehinderte Phenole, thioetherhaltige sterisch gehinderte Phenole, 2,2'-Methylen-bis-(4-methyl-6-tert-butylphenol) (BPH) sowie sterisch gehinderte Thiobisphenole verwendet.

Falls eine Verfärbung des Kautschuks ohne Bedeutung ist, können auch aminische Alterungsschutzmittel z. B. Mischungen aus Diaryl-p-phenylendiaminen (DTPD), octyliertes Diphenylamin (ODPA), Phenyl-α-naphthylamin (PAN), Phenyl-ß-naphthylamin (PBN), vorzugsweise solche auf Phenylendiaminbasis, z. B. N-Isopropyl-N'-phenyl-p-phenylendiamin, N-1,3-Dimethylbutyl-N'-Phenyl-p-phenylendiamin (6PPD), N-1,4-Dimethylpentyl-N'-phenyl-p-phenylendiamin (7PPD), N,N'-bis-(1,4-Dimethylpentyl)-p-phenylendiamin (77PD) eingesetzt werden.

Weitere Alterungsschutzmittel sind Phosphite wie Tris-(nonylphenyl)phosphit, polymeri-siertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI), welche meist in Kombination mit obigen phenolischen Alterungsschutzmitteln eingesetzt werden. TMQ, MBI und MMBI werden vor allem für NBR-Kautschuke verwendet, welche peroxidisch vulkanisiert werden.

Die Ozonbeständigkeit kann durch Antioxidantien wie beispielsweise N-1,3-Dimethylbutyl-N'-phenyl-p-phenylendiamin (6PPD), N-1,4-Dimethylpentyl-N'-phenyl-p-phenylendiamin (7PPD), N,N'-Bis- (1,4-dimethylpentyl)-p-phenylendiamin (77PD), Enolether oder cyclische Acetale verbessert werden.

Verarbeitungshilfsmittel sollen zwischen den Kautschuk-Partikeln wirksam werden und Reibungskräften beim Mischen, Plastifizieren und Verformen entgegenwirken. Als Verarbeitungshilfsmittel können die erfindungsgemäßen Kautschukmischungen alle für die Verarbeitung von Kunststoffen üblichen Gleitmittel enthalten, wie beispielsweise Kohlenwasserstoffe, wie Öle, Paraffine und PE-Wachse, Fettalkohole mit 6 bis 20 C- Atomen, Ketone, Carbonsäuren, wie Fettsäuren und Montansäuren, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Um die Entflammbarkeit zu vermindern und die Rauchentwicklung beim Verbrennen zu verringern, kann die erfindungsgemäße Kautschukmischungszusammensetzung auch Flammschutzmittel enthalten. Hierfür werden beispielsweise Antimontrioxid, Phosphorsäureester, Chlorparaffin, Aluminiumhydroxid, Borverbindungen, Zinkverbindungen, Molybdäntrioxid, Ferrocen, Calciumcarbonat oder Magnesiumcarbonat verwendet.

Vor der Vernetzung können der erfindungsgemäßen Kautschukmischung und dem erfindungsgemäßen Kautschukvulkanisat auch weitere Kunststoffe beigefügt werden, welche beispielsweise als polymere Verarbeitungshilfsmittel oder Schlagzähigkeitsverbesserer wirken. Diese Kunststoffe werden bevorzugt gewählt aus der Gruppe bestehend aus den Homo- und Copolymeren auf Basis von Ethylen, Propylen, Butadien, Styrol, Vinylacetat, Vinylchlorid, Glycidylacrylat, Glycidylmethacrylat, Acrylaten und Methacrylaten mit Alkoholkomponenten von verzweigten oder unverzweigten C1- bis C10-Alkoholen, wobei Polyacrylate mit gleichen oder verschiedenen Alkoholresten aus der Gruppe der C4- bis C8-Alkohole, insbesondere des Butanols, Hexanols, Octanols und 2-Ethylhexanols, Polymethylmethacrylat, Methylmethacrylat-Butylacrylat-Copolymere, Methylmethacrylat-Butylmethacrylat-Copolymere, Ethylen-Vinylacetat-Copolymere, chloriertes Polyethylen, Ethylen-Propylen-Copolymere, Ethylen-Propylen-Dien-Copolymere besonders bevorzugt sind.

Bekannte Haftsysteme basieren auf Resorcin, Formaldehyd und Silica, die sogenannten RFS- Direkthaftsysteme. Diese Direkthaftsysteme können in beliebiger Menge der erfindungsgemäßen Kautschukmischung, zu jedem Zeitpunkt des Einmischens in die erfindungsgemäße Kautschukmischung, eingesetzt werden.

Als Formaldehyd-Spender eignen sich neben Hexamethylentetramin auch Methylolaminderivate. Eine mögliche Haftverbesserung wird durch Zugabe von zur Kunstharzbildung befähigten Komponenten wie Phenol und oder Amine und Aldehyde oder Aldehyde abspaltende Verbindungen zu den bekannten Kautschukmischungen erzielt. Eine breite Anwendung als Harzbildungskomponenten in Kautschukhaftmischungen finden Resorzin und Hexamethylentetramin (HEXA) (GB-PS 801 928, FR-PS 1 021 959), gegebenenfalls in Kombination mit Kieselsäurefüllstoff (DE-AS 1 078 320).

Das erfindungsgemäße Kautschukvulkanisat kann beispielsweise zur Herstellung von Schaumstoffen verwendet werden. Dazu werden ihr chemisch oder physikalisch wirkende Treibmittel zugefügt. Als chemisch wirkende Treibmittel kommen alle für diesen Zweck bekannten Substanzen in Betracht, wie beispielsweise Azodicarbonamid, p-Toluolsulfonylhydrazid, 4,4'-Oxybis(benzolsulfohydrazid), p-Toluolsulfonylsemicarbazid, 5-Phenyltetrazol, N,N'-Dinitroso-pentamethylentetramin, Zinkcarbonat oder Natriumhydrogencarbonat sowie diese Substanzen enthaltende Mischungen. Als physikalisch wirkende Treibmittel sind beispielsweise Kohlendioxid oder Halogenkohlenwasserstoffe geeignet.

Die Vulkanisation der erfindungsgemäßen Kautschukmischungen erfolgt typischerweise bei Temperaturen von 100 - 250 °C, vorzugsweise 130 - 180 °C, wobei gegebenenfalls ein Druck von 10 - 200 bar vorherrscht.

Ein weiterer Gegenstand der vorliegenden Erfindung ist die Verwendung von Polyethylenimin zur Herstellung der erfindungsgemäßen Kautschukmischungen, Vulkanisate und/oder Kautschukprodukte.

### Herstellung der erfindunqsaemäßen Kautschukvulkanisate

Aus den in Tabelle 1 aufgeführten Kautschuk-Rezepturen des Beispiel 1 und des Referenzbeispiels wurden Vulkanisate hergestellt. Dazu wurden jeweils in einem Mischprozess, wie unten beschrieben, die jeweiligen Bestandteile der Beispiele 1 bis 3 sowie des Referenzbeispiels gemischt. Die Kautschukmischungen wurden anschließend bei 150°C ausvulkanisiert.

Mischschritte:
▪ Der Naturkautschuk (NR, wie beispielsweise TSR / RSS DEFO 1000) wurde in einem Kneter (GK 1,5) vorgelegt und die Additive ZINKWEISS ROTSIEGEL, CORAX^{®} N 339, EDENOR^{®} C 18 98-100, VULKANOX^{®} 4020/LG bei Temperaturen unter 80°C, vorzugsweise bei ca. 40°C und ca. 40 Umdrehungen gemischt.
▪ Danach wurden diese NR-Kautschukmischung auf eine temperierte Walze gegeben und die folgenden Produkte MAHLSCHWEFEL 90/95 CHANCEL, VULKACIT^{®} CZ/C, RHENOGRAN^{®} DPG-80 und/oder das Polyethylenimin hinzugegeben und in die Kautschukmischung eingearbeitet. Die Walzentemperatur liegt unter 100°C, vorzugsweise unter 50°C, ganz besonders bevorzugt bei ungefähr 40°C.

Die hergestellten Kautschukmischungen und Vulkanisate wurden den unten angegebenen technischen Prüfungen unterzogen. Die ermittelten Werte sind der Tabelle 2 zu entnehmen.

Die Mischschritte und die Reihenfolge der Additive können beliebig variiert werden und Polyethylenimin kann in jedem beliebigen Mischschritt hinzugegeben werden.

### Bestimmung der Eigenschaften von Kautschukmischung bzw. Vulkanisaten:

### Mooney-Viskositätsmessung:

Die Bestimmung erfolgte mittels Scherscheibenviskosimeter gemäß ASTM D 1646. Die Viskosität lässt sich aus der Kraft, die Kautschuke (und Kautschukmischungen) ihrer Verarbeitung entgegensetzen, direkt bestimmen. Beim Scherscheibenviskosimeter nach Mooney wird eine geriffelte Scheibe oben und unten mit Probensubstanz umschlossen und in einer beheizbaren Kammer mit etwa zwei Umdrehungen in der Minute bewegt. Die hierzu erforderliche Kraft wird als Drehmoment gemessen und entspricht der jeweiligen Viskosität. Die Probe wird in der Regel eine Minute lang auf 100°C vorgewärmt; die Messung dauert weitere 4 Minuten, wobei die Temperatur konstant gehalten wird. Die Viskosität wird zusammen mit den jeweiligen Prüfbedingungen angegeben, beispielsweise ML (1+4) 100°C (Mooney Viskosität, Rotorgröße L, Vorwärmzeit und Prüfzeit in Minuten, Prüftemperatur).

### Rheometer (Vulkameter) Ausvulkanisationszeit 150°C (t95):

Der Vulkanisationsverlauf am MDR (moving die rheometer) und dessen analytischen Daten werden an einem Monsanto-Rheometer MDR 2000 nach ASTM D5289-95 gemessen. Als Ausvulkanisationszeit, wird die Zeit bestimmt, bei der 95% des Kautschuks vernetzt ist. Die gewählte Temperatur betrug 150°C.

### Bruchdehnung, Zugfestigkeit, Modul 300:

Diese Messungen erfolgten nach DIN 53504 (Zugversuch, Stab S 2).

**Tabelle 1: Kautschuk-Rezeptur**

| Im Folgenden soll die vorlie jedoch darauf zu beschränke gende Erfindung durch Beispiele e en. erläutert werden, ohne diese | | | | | |
|---|---|---|---|---|---|
| Bestandteile der erfindungs gemäßen Kautschukzubereitunger : | | | | | |
| Kautschukrezeptur | | Vergleich | Referenz | | Beispiel 1 |
| TSR / RSS DEFO 1000 | | 100 | 100 | | 100 |
| Zinkweiss Rotsiegel | | 5 | 5 | | 5 |
| Edenor C 1898-100 | | 3 | 3 | | 3 |
| Corax N 330 | | 45 | 45 | | 45 |
| Tudalen 1849-TE | | 5 | 5 | | 5 |
| Vulkanox 4020/LG | | 2 | 2 | | 2 |
| VULKACIT CZ/C | | 1,5 | 1,5 | | 1,5 |
| Mahlschwefel 90/95 Chancel | | 1,5 | 1,5 | | 1,5 |
| RHENOGRAN DPG-80 | | - | 0,6 | | - |
| Lupasol PR 8515 | | - | - | | 0,6 |

| Mengenangaben in phr (Ge wichtsteile pro 100 Teile Kautschuk k) | | | | | |
|---|---|---|---|---|---|
| Handelsname | Erläuterung | | | Hersteller/Vertrieb | |
| TSR / RSS (vor-mastiziert auf DEFO-Härte 1000) | NR | | | Weber & Schaer GmbH&Co | |
| CORAX N 339 | Ruß | | | Degussa-Evonik GmbH | |
| RHENOGRAN DPG-80 | Diphenylguanidin | | | RheinChemie | |
| TUDALEN 1849-TE | Mineralöl | | | Hansen&Rosenthal KG | |
| EDENOR C 18 98-100 | Stearinsäure | | | Cognis Deutschland GmbH | |
| VULKANOX 4020/LG | N-1,3-Dimethylbutyl-N-phenyl-p-phenylendiamin | | | Lanxess Deutschland GmbH | |
| ZINKWEISS ROTSIEGEL | Zinkoxid | | | Grillo Zinkoxid GmbH | |
| VULKACIT CZ/C | N-cyclohexyl-2-benzothiazol-sulfenamid | | | Lanxess Deutschland GmbH | |
| MAHLSCHWEFEL 90/95 CHANCEL | Schwefel | | | Solvay Deutschland GmbH | |
| Lupasol PR 8515 (Polyethylenimin) | Polyethylenimin CAS-Nr.: 25987-06-8 | | | BASF AG | |

**Tabelle 2: Zusammenstellung der Ergebnisse**

| Kautschukrezeptur | | Vergleich | Referenz | Beispiel 1 |
|---|---|---|---|---|
| ML 1+4 (Mooney Viskosität) | ME | 21 | 24 | 20 |
| Ausvulkanisationszeit (t95) | s | 546 | 424 | 320 |
| Modul 300 | % | 11,1 | 11 | 10,7 |
| Bruchdehnung | MPa | 625 | 560 | 613 |
| Zugfestigkeit | MPa | 32,4 | 29,1 | 31,6 |

### Beispiele 2 bis 4

Beispiele 2 bis 4 wurden analog zu Beispiel 1 durchgeführt, wobei der einzige Unterschied gegenüber Beispiel 1 darin bestand, dass anstelle von 0,6 phr geringere Mengen Polyethylenimin eingesetzt wurden. Unter Beibehaltung der niederen Mooneyviskosität wurde wiederum eine vorteilhafte Verringerung der Ausvulkanisationszeit (t95) gegenüber dem Referenz- und Vergleichsbeispiel bei weiterhin vorzüglichen, in Tabelle 3 dargestellten Vulkanisateigenschaften, erzielt.

**Tabelle 3: Zusammenstellung der Ergebnisse für Beispiele 2 bis 4**

| Kautschukrezeptur | | Beispiel 2 | Beispiel 3 | Beispiel 4 |
|---|---|---|---|---|
| Anteile Polyethylenimin | phr | 0,5 | 0,4 | 0,3 |
| Ausvulkanisationszeit (t95) | s | 337 | 353 | 379 |
| Modul 300 | % | 11,2 | 11,4 | 10,7 |
| Bruchdehnung | MPa | 610 | 591 | 628 |
| Zugfestigkeit | MPa | 31,9 | 30,5 | 31,6 |

Überraschend zeigte sich, dass die Verwendung von Polyethylenimin anstelle von Diphenylguanidin oder organischer Guanidinverbindungen es ermöglicht Kauschukmischungen zu erhalten, deren Anwendungseigenschaften nicht nur auf gleichem Niveau wie die der guanidinhaltigen Äquivalente liegen sondern sich sogar vorteilhaft davon abheben, insbesondere im Hinblick auf die Mooney Viskosität und Ausvulkanisationszeit (t95) bzw. dem Modul 300, der Zugfestigkeit sowie der Bruchdehnung der daraus erhältlichen Vulkanisate.

Die erfindungsgemäßen Kautschukmischungen zeigten keine Dispersionsprobleme. Bei der Verarbeitung wird wenig oder kein Anilin freigesetzt.

## Patentansprüche

1. Kautschukmischung enthaltend zumindest
- einen Kautschuk
- einen Kieselsäure-basierten Füllstoff und/oder Ruß
- Polyethylenimin,
**dadurch gekennzeichnet, dass** sie weder Diphenylguanidin noch andere organische Guanidinderivate enthält.

2. Kautschukmischung nach Anspruch 1, **dadurch gekennzeichnet, dass** der Gehalt an Polyethylenimin 0,01 bis 10 phr, vorzugsweise 0,03 bis 3 phr, besonders bevorzugt 0,1 bis 1 phr, ganz besonders bevorzugt 0,2 bis 0,5 phr beträgt.

3. Kautschukmischung nachAnspruch 1 oder 2, **dadurch gekennzeichnet, dass** das Polyethylenimin einen Anteil an sich von Ethyleniminmonomer ableitenden Wiederholungeinheiten von mindestens 80 Gew.-%, bevorzugt mindestens 90 Gew.-%, besonders bevorzugt mindestens 95 Gew.-%, und meist bevorzugt mindestens 98 Gew.-% jeweils bezogen auf die Gesamtmasse des Polymers aufweist.

4. Kautschukmischung nach einem der Ansprüche 1 bis 3, **dadurch gekennzeichnet dass** diese Mischung mindestens einen Kautschuk ausgewählt aus der Gruppe bestehend aus NR, SBR, BR, IR, IIR, ENR und EPDM, bevorzugt NR, SBR, BR, IIR und EPDM, besonders bevorzugt NR, BR und SBR enthält.

5. Kautschukmischung nach einem der Ansprüche 1 bis 4, **dadurch gekennzeichnet, dass** sie mindestens einen Vernetzer, vorzugsweise mindestens einen peroxidischen oder Schwefel-basierten Vernetzer, besonders bevorzugt mindestens einen Vernetzer aus der Gruppe enthaltend Schwefel, Dimorpholyldisulfid (DTDM), 2-Morpholinodithiobenzothiazol (MBSS), Caprolactamdisulfid, Dipentamethylenthiuramtetrasulfid (DPTT), Tetramethylthiuramdisulfid (TMTD) und Tetrabenzylthiuramdisulfid (TBzTD, CAS-Nr.: 10591-85-2), insbesondere TBzTD enthält.

6. Kautschukmischung nach einem der Ansprüche 1 bis 5, **dadurch gekennzeichnet, dass** sie mindestens einen Kieselsäure-basierten Füllstoff, vorzugsweise Kieselsäure mit einer spezifischen BET Oberfläche von 5 bis 1000 m²/g, besonders bevorzugt 20 - 400 m²/g enthält.

7. Kautschukmischung nach einem der Ansprüche 1 bis 6, **dadurch gekennzeichnet, dass** sie 50 bis 100 phr hydroxylgruppen-haltigen oxidischen Füllstoff und 0,2 bis 12 phr an organischen Silanen, vorzugsweise schwefelhaltigen organischen Silanen, besonders bevorzugt Alkoxysilyl- und ganz besonders bevorzugt Trialkoxysilylgruppen enthaltenden schwefelhaltigen organischen Silanen enthält.

8. Kautschukmischung nach einem der Ansprüche 1 bis 7, **dadurch gekennzeichnet, dass** das Polyethylenimin auf einem Träger, vorzugsweise einem Träger ausgewählt aus der Gruppe bestehend aus natürlichen und synthetischen Silikaten, insbesondere neutrales, acides und basisches Silica, Aluminiumoxid, Ruß, Zinkoxid und Mischungen davon aufgezogen und/oder daran adsorbiert eingesetzt wird.

9. Kautschukmischung nach einem der Ansprüche 1 bis 8, **dadurch gekennzeichnet, dass** sie 0,1 bis 15 phr, 1,6-Bis(N,N-dibenzylthiocarbamoyldithio)-hexan und/oder Hexamethylen-1,6-bis(thiosulfat) als Säure oder Salz, bevorzugt 0,1 bis 2 phr 1,6-Bis(N,N-dibenzylthiocarbamoyldithio)-hexan, und meist bevorzugt 0,2 bis 1 phr Bis(N,N-dibenzylthiocarbamoyldithio)-hexan enthält.

10. Verfahren zur Herstellung einer Kautschukmischung nach einem der Ansprüche 1 bis 9, **dadurch gekennzeichnet, dass** mindestens je ein Kautschuk, ein Kieselsäure-basierender Füllstoff und/oder Ruß und Polyethylenimin, vorzugsweise bei einer Temperatur von mindestens 30°C, vorzugsweise von 40 bis 200°C besonders bevorzugt bei 80 bis 150°C miteinander vermischt werden.

11. Verfahren zur Herstellung von Kautschukvulkanisaten **dadurch gekennzeichnet, dass** man die Kautschukmischung gemäß einem der Ansprüche 1 bis 9 vorzugsweise bei einer Temperatur von 100 bis 250 °C, besonders bevorzugt von 130 bis 180 °C vulkanisiert.

12. Vulkanisate, erhältlich durch Vulkanisation von Kautschukmischungen gemäß einem der Ansprüche 1 bis 9.

13. Kautschukprodukte, vorzugsweise technische Gummiartikel und Reifen enthaltend ein oder mehrere Kautschukvulkanisate gemäß Anspruch 12.

14. Fahrzeug enthaltend Kautschukprodukt gemäß Anspruch 13.

15. Verwendung von Polyethylenimin zur Herstellung von Kautschukmischungen gemäß einem der Ansprüche 1 bis 9, Vulkanisaten gemäß Anspruch 12 oder Kautschukprodukten gemäß Anspruch 13.

## Claims

1. Rubber mixture comprising at least
- a rubber
- a silica-based filler and/or carbon black
- polyethyleneimine,
**characterized in that** it contains neither diphenylguanidine nor other organic guanidine derivatives.

2. Rubber mixture according to Claim 1, **characterized in that** the content of polyethyleneimine is 0.01 to 10 phr, preferably 0.03 to 3 phr, particularly preferably 0.1 to 1 phr, very particularly preferably 0.2 to 0.5 phr.

3. Rubber mixture according to Claim 1 or 2, **characterized in that** the polyethyleneimine has a proportion of ethyleneimine-monomer-derived repeating units of at least 80 wt%, preferably at least 90 wt%, particularly preferably at least 95 wt% and most preferably at least 98 wt% in each case based on the total mass of the polymer.

4. Rubber mixture according to any of Claims 1 to 3, **characterized in that** this mixture comprises at least one rubber selected from the group consisting of NR, SBR, BR, IR, IIR, ENR and EPDM, preferably NR, SBR, BR, IIR and EPDM, particularly preferably NR, BR and SBR.

5. Rubber mixture according to any of Claims 1 to 4, **characterized in that** it comprises at least one crosslinker, preferably at least one peroxidic or sulphur-based crosslinker, particularly preferably at least one crosslinker from the group comprising sulphur, dimorpholyl disulphide (DTDM), 2-morpholinodithiobenzothiazole (MBSS), caprolactam disulphide, dipentamethylenethiuram tetrasulphide (DPTT), tetramethylthiuram disulphide (TMTD) and tetrabenzylthiuram disulphide (TBzTD, CAS No.: 10591-85-2), in particular TBzTD.

6. Rubber mixture according to any of Claims 1 to 5, **characterized in that** it comprises at least one silica-based filler, preferably silica having a specific BET surface area of 5 to 1000 m²/g, particularly preferably 20 - 400 m²/g.

7. Rubber mixture according to any of Claims 1 to 6, **characterized in that** it comprises 50 to 100 phr of hydroxyl-containing oxidic filler and 0.2 to 12 phr of organic silanes, preferably sulphur-containing organic silanes, particularly preferably sulphur-containing organic silanes comprising alkoxysilyl groups and very particularly preferably sulphur-containing organic silanes comprising trialkoxysilyl groups.

8. Rubber mixture according to any of Claims 1 to 7, **characterized in that** the polyethyleneimine is employed ab- and/or adsorbed on a carrier, preferably a carrier selected from the group comprising natural and synthetic silicates, in particular neutral, acidic or basic silica, aluminium oxide, carbon black, zinc oxide and mixtures thereof.

9. Rubber mixture according to any of Claims 1 to 8, **characterized in that** it comprises 0.1 to 15 phr of 1,6-bis(N,N-dibenzylthiocarbamoyldithio)hexane and/or hexamethylene-1,6-bis(thiosulphate) as acid or salt, preferably 0.1 to 2 phr of 1,6-bis(N,N-dibenzylthiocarbamoyldithio)hexane, and most preferably 0.2 to 1 phr of bis(N,N-dibenzylthiocarbamoyldithio) hexane.

10. Process for producing a rubber mixture according to any of Claims 1 to 9, **characterized in that** in each case at least a rubber, a silica-based filler and/or carbon black and polyethyleneimine are mixed with one another, preferably at a temperature of at least 30°C, preferably of 40 to 200°C, particularly preferably at 80 to 150°C.

11. Process for producing rubber vulcanizates, **characterized in that** the rubber mixture according to any of Claims 1 to 9 is vulcanized preferably at a temperature of 100 to 250°C, particularly preferably of 130 to 180°C.

12. Vulcanizates obtainable by vulcanization of rubber mixtures according to any of Claims 1 to 9.

13. Rubber products, preferably technical rubber articles and tyres comprising one or more rubber vulcanizates according to Claim 12.

14. Vehicle comprising rubber product according to Claim 13.

15. Use of polyethyleneimine for producing rubber mixtures according to any of Claims 1 to 9, vulcanizates according to Claim 12 or rubber products according to Claim 13.

## Revendications

1. Mélange de caoutchouc contenant au moins
- un caoutchouc
- une charge et/ou suie à base d'acide silicique
- une polyéthylèneimine,
**caractérisé en ce qu'**il ne contient ni de la diphénylguanidine, ni d'autres dérivés organiques de guanidine.

2. Mélange de caoutchouc selon la revendication 1, **caractérisé en ce que** la teneur en polyéthylèneimine est de 0,01 à 10 phr, de préférence de 0,03 à 3 phr, particulièrement préférablement de 0,1 à 1 phr, tout particulièrement préférablement de 0,2 à 0,5 phr.

3. Mélange de caoutchouc selon la revendication 1 ou 2, **caractérisé en ce que** la polyéthylèneimine présente une proportion de motifs répétitifs issus de monomère des éthylèneimine d'au moins 80 % en poids, préférablement d'au moins 90 % en poids, particulièrement préférablement d'au moins 95 % en poids et de manière généralement préférée d'au moins 98 % en poids à chaque fois par rapport à la masse totale du polymère.

4. Mélange de caoutchouc selon l'une quelconque des revendications 1 à 3, **caractérisé en ce que** ce mélange contient au moins un caoutchouc choisi dans le groupe constitué par NR, SBR, BR, IR, IIR, ENR et EPDM, préférablement NR, SBR, BR, IIR et EPDM, particulièrement préférablement NR, BR et SBR.

5. Mélange de caoutchouc selon l'une quelconque des revendications 1 à 4, **caractérisé en ce qu'**il contient au moins un agent de réticulation, de préférence au moins un agent de réticulation peroxydique ou à base de soufre, particulièrement préférablement au moins un agent de réticulation du groupe contenant le soufre, le disulfure de dimorpholinyle (DTDM), le 2-morpholinodithiobenzothiazole (MBSS), le disulfure de caprolactame, le tétrasulfure de dipentaméthylènethiurame (DPTT), le disulfure de tétraméthylthiurame (TMTD) et le disulfure de tétrabenzylthiurame (TBzTD, n° CAS : 10591-85-2), en particulier le TBzTD.

6. Mélange de caoutchouc selon l'une quelconque des revendications 1 à 5, **caractérisé en ce qu'**il contient au moins une charge à base d'acide silicique, de préférence un acide silicique doté d'une surface spécifique BET de 5 à 1 000 m²/g, particulièrement préférablement de 20 à 400 m²/g.

7. Mélange de caoutchouc selon l'une quelconque des revendications 1 à 6, **caractérisé en ce qu'**il contient 50 à 100 phr de charge à base d'oxyde contenant des groupes hydroxyle et 0,2 à 12 phr de silanes organiques, de préférence de silanes organiques contenant du soufre, particulièrement préférablement de silanes organiques contenant du soufre contenant des groupes alcoxysilyle et tout particulièrement préférablement des groupes trialcoxysilyle.

8. Mélange de caoutchouc selon l'une quelconque des revendications 1 à 7, **caractérisé en ce que** la polyéthylèneimine est montée sur un support, de préférence un support choisi dans le groupe constitué par des silicates naturels et synthétiques, en particulier de la silice, de l'oxyde d'aluminium, de la suie, de l'oxyde de zinc neutres, acides et basiques et des mélanges correspondants et/ou est adsorbée sur celui-ci.

9. Mélange de caoutchouc selon l'une quelconque des revendications 1 à 8, **caractérisé en ce qu'**il contient 0,1 à 15 phr, de 1,6-bis(N,N-dibenzylthiocarbamoyldithio)-hexane et/ou d'hexaméthylène-1,6-bis(thiosulfate) en tant qu'acide ou sel, préférablement 0,1 à 2 phr de 1,6-bis(N,N-dibenzylthiocarbamoyldithio)-hexane et de manière généralement préférée 0,2 à 1 phr de 1,6-bis(N,N-dibenzylthiocarbamoyldithio)-hexane .

10. Procédé pour la préparation d'un mélange de caoutchouc selon l'une quelconque des revendications 1 à 9, **caractérisé en ce qu'**au moins un caoutchouc, une charge et/ou suie à base d'acide silicique et une polyéthylèneimine sont mélangés les uns avec les autres, de préférence à une température d'au moins 30 °C, de préférence de 40 à 200 °C, particulièrement préférablement à une température de 80 à 150 °C.

11. Procédé pour la préparation de vulcanisats de caoutchouc, **caractérisé en ce qu'**on vulcanise le mélange de caoutchouc selon l'une quelconque des revendications 1 à 9 de préférence à une température de 100 à 250 °C, particulièrement préférablement de 130 à 180 °C.

12. Vulcanisats, qui peuvent être obtenus par vulcanisation de mélanges de caoutchouc selon l'une quelconque des revendications 1 à 9.

13. Produits de caoutchouc, de préférence articles techniques en caoutchouc et pneus contenant un ou plusieurs vulcanisats de caoutchouc selon la revendication 12.

14. Véhicule contenant un produit de caoutchouc selon la revendication 13.

15. Utilisation de polyéthylèneimine pour la préparation de mélanges de caoutchouc selon l'une quelconque des revendications 1 à 9, de vulcanisats selon la revendication 12 ou de produits de caoutchouc selon la revendication 13.
